# EUROPÄISCHE PATENTSCHRIFT

(11) **EP 4 338 217 B1**
(45) Veröffentlichungstag und Bekanntmachung des Hinweises auf die Patenterteilung: **23.04.2025**
(21) Anmeldenummer: 22723016.6
(22) Anmeldetag: 02.05.2022
(51) Int. Cl.: H01M 8/04119, B01F 23/20

(54) **LUFTBEFEUCHTUNGSVORRICHTUNG, VERFAHREN ZUM BETREIBEN EINER LUFTBEFEUCHTUNGSVORRICHTUNG UND SYSTEM, AUFWEISEND ZUMINDEST EINE LUFTBEFEUCHTUNGSVORRICHTUNG**
AIR HUMIDIFIER, METHOD FOR OPERATING AN AIR HUMIDIFIER AND SYSTEM COMPRISING AN AIR HUMIDIFIER
HUMIFICATEUR D'AIR, PROCÉDÉ D'OPÉRATION D'UN HUMIFICATEUR D'AIR ET SYSTÈME COMPRENANT UN HUMIFICATEUR D'AIR,

(30) Priorität: 12.05.2021 DE 102021112492
(43) Veröffentlichungstag der Anmeldung: 20.03.2024
(73) Patentinhaber: MTU Aero Engines AG, 80995 München (DE)
(72) Erfinder: HÄGERT, Jan, 80995 München (DE)
(86) Internationale Anmeldenummer: PCT/DE2022/100332
(87) Internationale Veröffentlichungsnummer: WO 2022/237934

(56) Entgegenhaltungen:
- CN-B- 111 640 968
- DE-A1- 19 856 169

## Beschreibung

Die vorliegende Erfindung betrifft eine Luftbefeuchtungsvorrichtung gemäß den Merkmalen des Oberbegriffs des Anspruchs 1, ein Verfahren zum Betreiben einer Luftbefeuchtungsvorrichtung gemäß den Merkmalen des Oberbegriffs des Anspruchs 6 sowie ein System gemäß den Merkmalen des Oberbegriffs des Anspruchs 7.

Für manche Vorrichtungen ist es erforderlich, dass diese durch Luft mit einer vorbestimmten Luftfeuchtigkeit versorgt werden. Zur Bereitstellung der Luft beziehungsweise eines Luftstroms mit der erforderlichen Luftfeuchtigkeit kommen passive und aktive Luftbefeuchtersysteme zum Einsatz. Dies ist beispielsweise bei Brennstoffzellen mit einer Polymer-Elektrolyt-Membran (PEM) erforderlich. Einzelne Brennstoffzellen können als Segment in sogenannten Brennstoffzellenstapeln angeordnet werden, die auch als Stacks bezeichnet werden. Die einzelnen Brennstoffzellensegmente weisen dabei jeweilige Polymer-Elektrolyt-Membranen auf. Um einen effizienten Betrieb der Brennstoffzellen zu ermöglichen, ist es erforderlich, die Polymer-Elektrolyt-Membranen mittels einer zugeführten Kathodenluft, in der Wassertröpfen verdampft wurden, zu befeuchten. Die Verdampfung im Stack trägt zur Kühlung bei. Andererseits ist es erforderlich, eine durch die Tröpfchen in der Kathodenluft verursachte Wasseransammlung in einem Strömungsprofil, dem sogenannten Flowfield, der Brennstoffzellen zu vermeiden. Ein Nebeneffekt der Befeuchtung ist, dass durch ein Verdampfen der Feuchtigkeit in den Brennstoffzellen eine Kühlung der Brennstoffzellen erfolgt. Um sowohl die Wasseransammlung in der Brennstoffzelle zu vermeiden, als auch eine Kühlung der Brennstoffzellen durch die Tröpfchen zu ermöglichen, dürfen die Tröpfchen eine bestimmte Größe nicht überschreiten. Für die Bereitstellung solcher kleinen Tröpfchen werden in den Befeuchtungsvorrichtungen gewöhnlicherweise Zweistoff-Zerstäubungsdüsen verwendet.

Für den Luftfahrtbereich, insbesondere im Bereich der Primärantriebe, sind die bekannten Lösungen und Ansätze zur Luftbefeuchtung von Brennstoffzellen jedoch nicht umsetzbar oder weisen erhebliche Nachteile auf. Die aus dem Automobilbereich bekannten passiven Befeuchter erlauben keine zielgerichtete Beeinflussung der relativen Luftfeuchtigkeit der Kathodenluft. Zudem sind diese für eine Anwendung in dem Luftfahrtbereich zu schwer und zu voluminös. Sie leisten zudem keinen Beitrag zur Kühlung des Brennstoffzellenstapels. Zum Betreiben einer zur Bereitstellung feiner Tröpfchen üblichen Zweistoffzerstäubungsdüse muss Druckluft bereitgestellt werden, die ein Druckniveau aufweist, das deutlich über dem Druckniveau der Kathodenluft selbst liegt, um eine Zerstäubung des zur Befeuchtung erforderlichen Wassers zu ermöglichen. Der Aufwand wird dadurch erhöht, dass im Luftfahrtbereich ein geringer Umgebungsluftdruck herrscht. Die zu befeuchtende Umgebungsluft ist im Luftfahrtbereich zudem deutlich trockener und es sind größere Luftmengen zu befeuchten.

Ein weiteres Anwendungsgebiet von Luftbefeuchtungsvorrichtungen in der Luftfahrt sind Flugzeugturbinen, die als sogenannte Water-Enhanced Turbofan (WET) betrieben werden. Dabei wird befeuchtete Luft aus eine Wasserrückgewinnungseinrichtung in eine Verbrennungskammer einer Turbine geleitet, um unter anderem eine gleichmäßigere Temperaturverteilung bei der Verbrennung in der Verbrennungskammer zu ermöglichen. Dadurch ist es möglich, eine Bildung von Stickoxiden zu reduzieren.

Die US 9385380 B2 offenbart ein Verfahren und ein System zum Befeuchtungsmanagement in Brennstoffzellen. In dem Verfahren ist es vorgesehen, dass Luft zu einem Kathodeneinlassstrom einer Brennstoffzelle zugeführt wird. Es ist vorgesehen, einen Brennstoffzellenparameter zu erfassen, der mit der Feuchtigkeit des Kathodeneinlassstroms zusammenhängt. Es ist vorgesehen, die Brennstoffzelle selektiv entweder in einem aktiven Befeuchtungsmodus oder in einem deaktiven Befeuchtungsmodus auf der Grundlage des Brennstoffzellenparameters zu betreiben. In dem aktiven Befeuchtungsmodus erfolgt eine Zugabe von Wasser in den Kathodeneinlassstrom. In dem deaktiven Befeuchtungsmodus erfolgt keine Zugabe von Wasser in den Kathodeneinlassstrom.

Die US 5432020 A beschreibt eine Vorrichtung zum Bereitstellen von konditioniertem Prozessgas für den Betrieb luftatmender Brennstoffzellensysteme. Zum Betreiben der Brennstoffzellensysteme muss ein Prozessgas mit einer vorgegebenen Temperatur und Feuchtigkeit bereitgestellt werden. Zu diesem Zweck wird in eine Gaszuleitung eine dosierte Menge feiner Wassertröpfchen eingesprüht, wodurch die Prozessluft befeuchtet wird.

In der CN 206163612 U ist eine Befeuchtungsvorrichtung für eine Protonenaustauschmembran einer Brennstoffzelle offenbart.

Die CN 111640968 A offenbart einen Kombinationsbefeuchter und ein Befeuchtungssystem für Brennstoffzellen. Die Erfindung umfasst einen Membranbefeuchter und einen Kombinationsbefeuchter. Das Befeuchtungssystem ist dazu eingerichtet, ein Gas an einem Ausgang des Befeuchtungssystems in einem gesättigten Zustand auszugeben.

Die US 6835477 B1 offenbart einen Brennstoffzellenstapel aus Polymermembran-Brennstoffzellen, bei dem die Abfuhr der durch die Erzeugung von elektrischer Energie erzeugten Wärme und die Befeuchtung der als Elektrolyten verwendeten Ionentauschermembranen durch die direkte Injektion eines aus einem einzigen Hydraulikkreislauf stammenden Wasserstroms erreicht wird.

Die US 20140048615 A1 offenbart eine Zweistoffdüse zum Zerstäuben von Flüssigkeiten, aufweisend ein Düsengehäuse. Das Düsengehäuse weist mindestens einen Flüssigkeitseinlass für eine zu zerstäubende Flüssigkeit, einen zweiten Flüssigkeitseinlass für eine gasförmige Flüssigkeit, eine Mischkammer, eine Düsenauslassöffnung und eine die Düsenauslassöffnung umgebende Ringspaltöffnung auf. Innerhalb des Düsengehäuses ist eine Einrichtung zur Erzeugung eines zu zerstäubenden Flüssigkeitsfilms an einer Wand der Mischkammer und Einlassöffnungen zum Einspritzen der gasförmigen Flüssigkeit in die Mischkammer vorgesehen.

Die US 8028934 B2 offenbart eine Zweistoffzerstäubungsdüse die zum Versprühen einer Flüssigkeit unter Zuhilfenahme eines Druckgases eingerichtet ist. Die Zweistoffzerstäubungsdüse umfasst eine Mischkammer in die sich ein Flüssigkeitseinlass und ein Druckgaseinlass erstrecken. Die Zweistoffzerstäubungsdüse umfasst einen Auslass, der sich stromabwärts von der Mischkammer befindet. Durch eine zusätzliche Ringspaltverdüsung wird bei gleich großem Energieaufwand ein wesentlich feineres Tropfenspektrum erzeugt. Zudem ist die Zweistoffzerstäubungsdüse dazu vorgesehen, die mittlere Tropfengröße durch eine Verdrallung eines Kernstrahls zu reduzieren.

Die JP 4718811 B2 offenbart ein Verfahren zum Umwandeln einer Flüssigkeit in feine Partikel und eine Düse, welche in dem Verfahren verwendet wird. In dem Verfahren ist es vorgesehen, dass ein erhaltener Strahlstrom auf einen Kollisionspunkt fokussiert wird um an dem Kollisionspunkt Tröpfchen zu zerstäuben. Die zerstäubten Tröpfchen werden anschließend in einer Kreisform versprüht.

Die CN 110237953 B offenbart eine umweltfreundliche Zerstäubungsvorrichtung mit einer Düse. Die Zerstäubungsvorrichtung ist dazu eingerichtet, eine dreiphasige Mischflüssigkeit mehrmals zu mischen und kollidieren zu lassen, wodurch eine zu versprühende Flüssigkeit gleichmäßiger zerstäubt werden kann und feinere und kleinere Tröpfchengrößen aufweist.

Es ist eine Aufgabe der Erfindung, eine Luftbefeuchtungsvorrichtung bereitzustellen, welche ein sicheres und verbessertes Befeuchten eines Luftstroms mit feinen Flüssigkeitströpfchen, insbesondere im Bereich von Primärantrieben in der Luftfahrttechnik, ermöglicht.

Die Aufgabe wird erfindungsgemäß durch eine Luftbefeuchtungsvorrichtung gemäß den Merkmalen des Anspruchs 1, ein Verfahren zum Betreiben einer Luftbefeuchtungsvorrichtung gemäß den Merkmalen des Anspruchs 6 sowie ein System gemäß den Merkmalen des Anspruchs 7 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft eine Luftbefeuchtungsvorrichtung, die eine Mischkammer aufweist, in der eine Zerstäubungsdüse angeordnet ist, die zur Ausgabe einer Flüssigkeit als Sprühnebel eingerichtet ist. Mit anderen Worten weist die Luftbefeuchtungsvorrichtung die Mischkammer auf, die eine Zerstäubungsdüse zum Zerstäuben der Flüssigkeit aufweist. Die Mischkammer kann dazu vorgesehen sein, ein Volumen zum Mischen eines Gases mit einer Flüssigkeit bereitzustellen. Um ein Vermischen des Gases mit der Flüssigkeit zu ermöglichen, ist es vorgesehen, dass die Zerstäubungsdüse die Flüssigkeit zerstäubt, sodass die Flüssigkeit als Tröpfchen ausgegeben wird, welche einen Sprühnebel bilden. Bei der Zerstäubungsdüse handelt es sich um eine Einstoff-Zerstäubungsdüse. Die Mischkammer ist dazu eingerichtet, das entlang eines Hauptströmungspfades durch die Mischkammer geleitete Gas mit dem Sprühnebel zu vermischen und an einer Ausgangsöffnung der Mischkammer auszuleiten. Mit anderen Worten ist es vorgesehen, dass die Mischkammer dazu eingerichtet ist, das zu mischende Gas entlang des Hauptströmungspfades zu leiten und nach dem Vermischen des Gases mit der Flüssigkeit an der Ausgangsöffnung der Mischkammer auszugeben. Innerhalb der Mischkammer vermischt sich das durchgeleitete Gas mit dem Sprühnebel, sodass das an der Ausgangsöffnung ausgeleitete Gas mit der Flüssigkeit gemischt ist.

Für bestimmte Anwendungszwecke kann es erforderlich sein, dass das gemischte Gas nur feine Tröpfchen enthält. Mit anderen Worten kann es erforderlich sein, dass die in dem ausgeleiteten Gas enthaltenen Tröpfchen eine bestimmte Größe nicht überschreiten. Durch Zerstäubungsdüsen ausgegebene Tröpfchen können sich in ihrer Größe unterscheiden, sodass der Sprühnebel feinere und gröbere Tröpfchen enthalten kann. Es kann somit erforderlich sein, die gröberen Tröpfchen zu separieren, sodass nur die feineren Tröpfchen ausgegeben werden. Um dies zu erreichen ist es vorgesehen, dass die Zerstäubungsdüse eine Dralleinrichtung aufweist, die dazu eingerichtet ist, Tröpfchen des Sprühnebels mit einem Drall zu beaufschlagen, um den Sprühnebel als einen sich entlang des Hauptströmungspfades mit einem Kegelwinkel öffnenden geraden Sprühkreiskegel auszugeben. Mit anderen Worten weist die Zerstäubungsdüse die Dralleinrichtung auf. Die Dralleinrichtung ist dazu eingerichtet, den Sprühnebel derart auszuleiten, dass die Tröpfchen des Sprühnebels mit einem Drehimpuls beaufschlagt sind. Dies kann beispielsweise durch eine spiralförmige Ausleitung der Tröpfchen ermöglicht sein. Aufgrund des beaufschlagten Drehimpulses und der Bewegung der Tröpfchen entlang des Hauptströmungspfades des Gases bewegen sich die einzelnen Tröpfchen ausgehend von der Zerstäubungsdüse entlang sich öffnender Spiralbahnen. Die Beaufschlagung der Tröpfchen mit dem Drall führen dazu, dass die einzelnen Tröpfchen in Abhängigkeit von ihrer Größe in einem unterschiedlichen Umfang nach außen gelenkt werden. Durch die Spiralbahnen der jeweiligen Tröpfchen weist der aus den Tröpfchen bestehende Sprühnebel eine Form eines sich öffnenden geraden Sprühkreiskegels auf. Der Sprühkreiskegel weist dabei den Kegelwinkel auf, wobei sich in einem äußeren Bereich des Sprühkreiskegels größere Tröpfchen und in einem inneren Bereich des Sprühkreiskegels kleinere bewegen. Durch die Erzeugung des beschriebenen Sprühkreiskegels erfolgt somit eine Verteilung des Größenspektrums der Tröpfchen mit zunehmender Größe von innen nach außen. Es kann dadurch eine Grundlage zur Separierung der Tröpfchen in Abhängigkeit ihrer Größe bereitgestellt sein.

Um die Separierung durchzuführen ist vorgesehen, dass die Mischkammer eine Separierungseinrichtung aufweist, die dazu eingerichtet ist, Tröpfchen des Sprühkreiskegels, die sich ausgehend von der Zerstäubungsdüse entlang eines Hohlkegels, aufweisend einen vorbestimmten Innenwinkel, bewegen, aufzufangen. Mit anderen Worten ist es vorgesehen, dass die Separierungseinrichtung dazu eingerichtet ist, die Tröpfchen, die sich im äußeren Bereich des Sprühkreiskegels befinden, aufzufangen. Durch die Separierungseinrichtung werden folglich größere der Tröpfchen separiert. Die größeren der Tröpfchen bewegen sich dabei aufgrund der Beschriebenen Größenverteilung entlang des von der Zerstäubungsdüse ausgehenden Hohlkegels. Der Hohlkegel weist dabei den vorbestimmten Innenwinkel auf, der die zu separierenden Tröpfchen von den weiterzuleitenden Tröpfchen trennt. Die Separierungseinrichtung ist dazu eingerichtet, die aufgefangenen Tröpfchen zu sammeln und die durch das Auffangen der Tröpfchen zurückgewonnene Flüssigkeit an einem Separierungsausgang der Separierungseinrichtung auszugeben. Tröpfchen, die sich innerhalb des Hohlkegels bewegen, werden durch die Separierungseinrichtung der Ausgangsöffnung der Mischkammer zugeleitet. Durch die Verwendung der Separierungseinrichtung ergibt sich der Vorteil, dass das aus der Ausgangsöffnung der Mischkammer ausgeleitete Gas lediglich die feineren Tröpfchen enthält, weil die gröberen Tröpfchen ausgefiltert wurden. Der Vorteil der Erfindung besteht insbesondere darin, dass Luft mit feinen Tröpfchen befeuchtet werden kann, ohne eine Zweistoffdüse verwenden zu müssen. Der bei der Verwendung der Einstoffdüse bestehende Nachteil, dass kein zusätzlicher, variabler Stellparameter vorhanden ist und somit unter Umständen in Kauf genommen werden muss, dass auch größere Tröpfchen ins Gas abgegeben werden, wird dadurch ausgeglichen, dass die größeren Tröpfchen durch die Separierungseinrichtung aus dem Gas herausgefiltert werden.

Die Erfindung umfasst auch optionale Weiterbildungen, durch die sich weitere Vorteile ergeben.

Eine Weiterbildung der Erfindung sieht vor, dass die Separierungseinrichtung ein Koaxialrohr aufweist. Mit anderen Worten umfasst die Separierungseinrichtung das Koaxialrohr, welches ein äußeres Rohr aufweist, das in seinem Inneren ein inneres Rohr aufweist. Das äußere Rohr des Koaxialrohrs ist dabei dazu vorgesehen, die größeren der Tröpfchen, welche sich entlang des Hohlkegels bewegen, aufzufangen. Das innere Rohr ist dafür vorgesehen, die feineren Tröpfchen, die sich innerhalb des Hohlkegels bewegen, an die Ausgangsöffnung der Mischkammer weiterzuleiten. Das Koaxialrohr kann dabei zentriert gegenüber der Zerstäubungsdüse angeordnet sein, sodass der Sprühkreiskegel entlang des Hauptstrompfades auf das Koaxialroh ausgerichtet ist. eine Basisfläche eines Kegels der den inneren Winkel aufweist kann dabei mit einer Öffnung des inneren Rohres übereinstimmen. Die feineren Tröpfchen werden somit ausgehend von der Zerstäubungsdüse entlang des Hauptstrompfades in das innere Rohr geleitet, durch welches sie der Ausgangsöffnung zugeleitet werden. Eine Ringbasisfläche des Hohlkreiskegels kann mit einer Eingangsfläche des äußeren Rohres zusammenfallen, sodass die gröberen Tröpfchen in das äußere Rohr geleitet werden. Dadurch werden diese Tröpfchen nicht der Ausgangsöffnung zugeleitet.

Eine Weiterbildung der Erfindung sieht vor, dass die Separierungseinrichtung eine durch eine Blende umläufig umschlossene Separierungsöffnung aufweist, wobei die Blende dazu eingerichtet ist, die sich entlang des Hohlkegels bewegenden Tröpfchen aufzufangen. Die Separierungsöffnung ist dazu eingerichtet, die sich innerhalb des Hohlkegels bewegenden Tröpfchen der Ausgangsöffnung der Mischkammer zuzuleiten. Mit anderen Worten weist die Separierungseinrichtung die Separierungsöffnung auf, welche beispielsweise eine runde Öffnung sein kann, die durch eine Blende nach außen umschlossen sein kann. Die Blende kann eine ringförmige Fläche sein, die dazu vorgesehen ist, die Tröpfchen des Hohlkegels aufzufangen. Die Separierungsöffnung kann ein Eingang eines Rohres sein, welches mit der Ausgangsöffnung der Mischkammer verbunden sein kann. Der Hauptströmungspfad durch die Mischkammer kann dabei durch die Separierungsöffnung verlaufen.

Eine Weiterbildung der Erfindung sieht vor, dass die Luftbefeuchtungseinrichtung eine Rückgewinnungseinrichtung aufweist, die dazu eingerichtet ist, die zurückgewonnene Flüssigkeit aus der Separierungseinrichtung der Zerstäubungsdüse zuzuleiten. Mit anderen Worten ist es vorgesehen, dass die Flüssigkeit, die sich durch die in der Separierungseinrichtung ansammelnden Tröpfchen ansammelt, durch die Rückgewinnungseinrichtung der Zerstäubungsdüse zugeführt wird, damit die Flüssigkeit erneut durch die Zerstäubungsdüse ausgegeben werden kann. Dadurch ergibt sich der Vorteil, dass der Flüssigkeitsverbrauch durch die Luftbefeuchtungsvorrichtung reduziert werden kann, wodurch ein Ausmaß einer durch ein Flüssigkeitsreservoir bereitzustellende Flüssigkeitsmenge reduziert werden kann. Die Rückgewinnungseinrichtung kann beispielsweise eine Membran oder einen Kondensator zum Sammeln der Flüssigkeit aufweisen.

Eine Weiterbildung der Erfindung sieht vor, dass die Luftbefeuchtungseinrichtung eine Regeleinrichtung aufweist, die dazu eingerichtet ist, die durch die Zerstäubungsdüse auszugebende Flüssigkeitsmenge einzustellen, um ein vorbestimmtes Mischverhältnis zwischen dem Gas und der Flüssigkeit an der Ausgangsöffnung der Mischkammer einzuregeln. Mit anderen Worten ist die Luftbefeuchtungsvorrichtung dazu eingerichtet, ein vorbestimmtes Mischverhältnis zwischen dem Gas und der Flüssigkeit an der Ausgangsöffnung der Mischkammer einzuregeln. Zu diesem Zweck weist die Luftbefeuchtungsvorrichtung die Regeleinrichtung auf, welche die durch die Zerstäubungsdüse in einem gewissen Zeitfenster abgegebene Flüssigkeitsmenge derart wählt, dass die an der Ausgangsöffnung der Mischkammer ausgegebene Mischung das vorbestimmte Mischverhältnis aufweist. Zur Bereitstellung eines Mischverhältnisses des eingeleiteten und des ausgeleiteten Gases an die Regeleinrichtung können Sensordaten, durch Sensoren eines Verbauorts, in welchem die Luftbefeuchtungsvorrichtung angeordnet ist, empfangen werden.

Ein zweiter Aspekt der Erfindung betrifft ein Verfahren zum Betreiben einer Luftbefeuchtungsvorrichtung, die eine Mischkammer aufweist, in der eine Zerstäubungsdüse angeordnet ist. Entlang eines Hauptströmungspfades wird dabei durch die Mischkammer Gas geleitet. Durch die Zerstäubungsdüse wird eine Flüssigkeit als Sprühnebel ausgegeben. Das Gas in der Mischkammer wird mit dem Sprühnebel vermischt und an einer Ausgangsöffnung der Mischkammer ausgeleitet. Es ist vorgesehen, dass Tröpfchen des Sprühnebels durch eine Dralleinrichtung der Zerstäubungsdüse mit einem Drall beaufschlagt werden. Der Sprühnebel wird aufgrund des Dralls der Tröpfchen durch die Zerstäubungsdüse als ein sich entlang des Hauptströmungspfades mit einem Kegelwinkel öffnender gerade Sprühkreiskegel ausgegeben. Tröpfchen des Sprühkreiskegels, die sich ausgehend von der Zerstäubungsdüse entlang eines Hohlkegels mit einem vorbestimmten Innenwinkel bewegen, werden durch eine Separierungseinrichtung der Mischkammer aufgefangen. Eine durch das Auffangen der Tröpfchen zurückgewonnene Flüssigkeit wird durch die Separierungseinrichtung an einem Separierungsausgang der Separierungseinrichtung ausgegeben. Tröpfchen, die sich innerhalb des Hohlkegels bewegen, werden durch die Separierungseinrichtung der Ausgangsöffnung der Mischkammer zugeleitet. Weitere Merkmale und deren Vorteile sind den Beschreibungen des ersten Erfindungsaspekts zu entnehmen.

Ein dritter Aspekt der Erfindung betrifft ein System, das Luftbefeuchtungsvorrichtungen und einen Brennstoffzellenstapel aufweist. Der Brennstoffzellenstapel weist dabei mehrere Brennstoffzellen als Segmente auf. Das System weist eine Kathodenluftbereitstellungsvorrichtung auf, die dazu eingerichtet ist, eine mit Wasser zu mischende Kathodenluft in die Luftbefeuchtungsvorrichtungen einzuleiten. Es ist vorgesehen, dass die Luftbefeuchtungsvorrichtungen an ihren jeweiligen Ausgangsöffnungen, insbesondere Ausgangsöffnungen einer jeweiligen Mischkammer der Luftbefeuchtungsvorrichtungen, mit einer jeweiligen der Brennstoffzellen verbunden sind. Mit anderen Worten ist es vorgesehen, dass jedem der Brennstoffzellen-Stack-Segment eine eigene Luftbefeuchtungsvorrichtung zugewiesen ist. Die durch die Luftbefeuchtungsvorrichtungen ausgegebenen Mischungen werden somit jeweils nur einem einzigen der Brennstoffzellen-Segmente zugeleitet. Dadurch ergibt sich der Vorteil, dass eine individuelle Regelung der Luftbefeuchtungsvorrichtungen ermöglicht wird, um die Luftfeuchtigkeit in den Brennstoffzellen individuell zu regulieren.

Eine Weiterbildung der Erfindung sieht vor, dass das System als Luftfahrt-Primärantrieb eingerichtet ist. Mit anderen Worten ist das System zum Antreiben eines Luftfahrzeugs vorgesehen.

Weitere Merkmale und deren Vorteile sind den Beschreibungen des ersten und zweiten Erfindungsaspekts zu entnehmen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
Fig. 1 eine schematische Darstellung einer erfindungsgemäßen Luftbefeuchtungsvorrichtung;
Fig. 2 eine schematische Darstellung einer möglichen Ausführungsform des erfindungsgemäßen Systems, welches mehrere der Luftbefeuchtungsvorrichtungen aufweist; und
Fig. 3 eine weitere schematische Darstellung des in Fig. 2 gezeigten Systems.

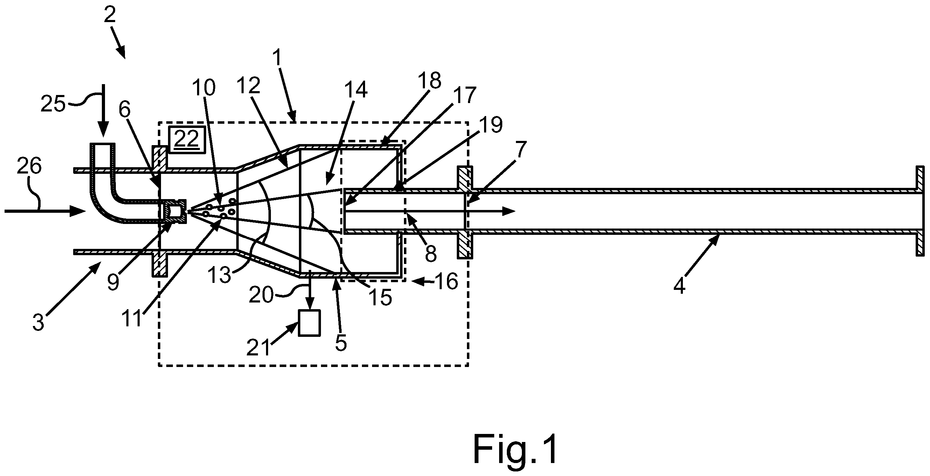

FIG. 1 eine schematische Darstellung einer erfindungsgemäßen Luftbefeuchtungsvorrichtung 1, die in einem System 2 angeordnet ist. Die Luftbefeuchtungsvorrichtung 1 kann dazu vorgesehen sein, eine Flüssigkeit 25 mit einem Gas 26 zu mischen. Bei der Flüssigkeit 25 kann es sich beispielsweise um Wasser handeln, welches dazu vorgesehen ist, mit Luft vermischt zu werden, um eine vorbestimmte Luftfeuchtigkeit des Gases 26 sicherzustellen. Die Luftbefeuchtungsvorrichtung 1 kann über ein Eingangsrohr 3 und ein Ausgangsrohr 4 in das System 2 eingebunden sein. Die Luftbefeuchtungsvorrichtung 1 kann eine Mischkammer 5 aufweisen, welche dazu eingerichtet sein kann, ein Vermischen der Flüssigkeit 25 mit dem Gas 26 zu ermöglichen. Die Mischkammer 5 kann eine Eingangsöffnung 6 aufweisen, an der das Eingangsrohr 3 angeschlossen sein kann. Die Mischkammer 5 kann eine Ausgangsöffnung 7 aufweisen, an der das Ausgangsrohr 4 des Systems 2 angeschlossen sein kann. Durch das Eingangsrohr 3 kann das zu mischende Gas 26 bereitgestellt werden, welches durch die Eingangsöffnung 6 in die Mischkammer 5 eingeleitet und an der Ausgangsöffnung 7 der Mischkammer 5 ausgeleitet werden kann, wobei das Gas 26 entlang eines Hauptströmungspfades 8 geführt werden kann. Der Hauptströmungspfad 8 kann beispielsweise durch eine Bereitstellung eines Überdrucks an dem Eingangsrohr 3 hervorgerufen sein. Um ein Vermischen des eingeleiteten Gases 26 in der Mischkammer 5 zu ermöglichen, kann in der Mischkammer 5 eine Zerstäubungsdüse 9 angeordnet sein. Die Zerstäubungsdüse 9 kann dazu eingerichtet sein, einen Sprühnebel 10 auszugeben, der Tröpfchen 11 der zu mischenden Flüssigkeit 25 aufweisen kann. Die Flüssigkeit 25 kann beispielsweise über eine Zuleitung der Zerstäubungsdüse 9 zugeleitet werden. Bei der Zerstäubungsdüse 9 handelt es sich insbesondere um eine Einstoff-Zerstäubungsdüse. Die Zerstäubungsdüse 9 kann eine Dralleinrichtung aufweisen, die dazu eingerichtet sein kann, die auszugebenden Tröpfchen 11 mit einem Drall zu beaufschlagen, sodass der abgegebene Sprühnebel 10 die Form eines Sprühkreiskegels aufweist. Der Sprühkreiskegel 12 kann dadurch entstehen, dass sich die Tröpfchen 11 aufgrund eines beaufschlagten Dralls und des sich entlang des Hauptströmungspfades 8 bewegenden Gases 26 in einer Spiralrichtung bewegen. Dabei bewegen sich Tröpfchen 11 mit einer größeren Masse entlang eines Randes des Sprühkreiskegels 12, während sich die Tröpfchen 11 einer geringeren Masse näher am Zentrum des Sprühkreiskegels 12 bewegen können. Der Sprühkreiskegel 12 kann in Abhängigkeit von der Geschwindigkeit des durchströmenden Gases 26 entlang des Hauptströmungspfades 8 und des aufgetragenen Dralls der Tröpfchen 11 einen bestimmten Kegelwinkel 13 aufweisen. Die Zerstäubungsdüse 9 kann entlang des Hauptströmungspfades 8 in Richtung der Ausgangsöffnung 7 ausgerichtet sein. Die Ausgangsöffnung 7 kann eine runde Form mit einem vorbestimmten Radius aufweisen. Der Kegelwinkel 13 des Sprühkreiskegels 12 kann eine Größe aufweisen, die dazu führen kann, dass nur ein Teil der Tröpfchen 11 der Ausgangsöffnung 7 zugeführt wird. Tröpfchen 11, die eine größere Masse aufweisen, können in einen Bereich außerhalb der Ausgangsöffnung 7 geleitet werden. Dadurch kommt es zu einer Trennung des Sprühkreiskegels 12 in einen inneren Kegel und einen Hohlkegel 14, wobei der innere Kegel einen Innenwinkel 15 aufweisen kann. Tröpfchen 11, die sich innerhalb des Innenkegels bewegen, werden dabei der Ausgangsöffnung 7 zugeleitet, während die sich entlang des Hohlkegels 14 bewegenden Tröpfchen 11 nicht der Ausgangsöffnung 7 zugeleitet werden. Um die Tröpfchen 11 des Hohlkegels 14 auffangen zu können, kann die Luftbefeuchtungsvorrichtung 1 eine Separierungseinrichtung 16 aufweisen, die dazu eingerichtet sein kann, die Tröpfchen 11 des Hohlkegels aufzufangen und die inneren Tröpfchen 11 der Ausgangsöffnung 7 zuzuleiten. Zu diesem Zweck kann die Separierungseinrichtung 16 eine Separierungsöffnung 17 aufweisen, um die innerhalb des Innenwinkels 15 strömenden Tröpfchen 11 aufzufangen. Die Separierungseinrichtung 16 kann beispielsweise als Koaxialrohr eingerichtet sein, wobei ein äußeres Rohr 18, das zur Aufnahme der äußeren Tröpfchen 11 des Hohlkegels 14 vorgesehen sein kann, in seinem Inneren ein inneres Rohr 19 aufweisen kann, welches die Tröpfchen 11, die sich innerhalb des Innenwinkels 1 5 bewegen, der Ausgangsöffnung 7 zuleiten soll. Die Separierungseinrichtung 16 kann einen Separierungsausgang 20 aufweisen, der dazu eingerichtet sein kann, die Flüssigkeit 25, die durch die aufgefangenen Tröpfchen 11 in der Separierungseinrichtung 16 gesammelt wird, auszugeben. In einer alternativen Ausführungsform der Luftbefeuchtungsvorrichtung 1 kann es vorgesehen sein, dass die Separierungseinrichtung 16 eine Blende aufweist, durch welche die äußeren Tröpfchen 11 aufgefangen werden können. Die Blende kann dazu eingerichtet sein, die Separierungsöffnung 17 umläufig zu umschließen. Die Luftbefeuchtungsvorrichtung 1 kann eine Rückgewinnungseinrichtung 21 aufweisen, welche dazu eingerichtet sein kann, die zurückgewonnene Flüssigkeit 25 aus der Separierungseinrichtung 16 der Zerstäubungsdüse 9 zuzuleiten. Die Rückgewinnungseinrichtung 21 kann beispielsweise einen Kondensator oder eine Pumpe aufweisen. Durch die Bereitstellung der Rückgewinnungseinrichtung 21 kann beispielsweise eine in einem Reservoir zu speichernde Menge der Flüssigkeit reduziert werden. Die Luftbefeuchtungsvorrichtung 1 kann eine Regeleinrichtung 22 aufweisen, die dazu eingerichtet sein kann, die durch die Zerstäubungsdüse 9 auszugebende Flüssigkeitsmenge festzulegen, um ein vorbestimmtes Mischverhältnis zwischen dem Gas 26 und der Flüssigkeit 25 an der Ausgangsöffnung 7 der Mischkammer 5 einzuregeln. Die Regeleinrichtung 22 kann beispielsweise einen Mikroprozessor oder einen Mikrocontroller aufweisen und dazu eingerichtet sein, das Mischverhältnis zwischen dem Gas 26 und der Flüssigkeit 25 zu erfassen und in Abhängigkeit von einem vorbestimmten Mischverhältnis zwischen dem Gas 26 und der Flüssigkeit 25 die Zerstäubungsdüse 9 anzusteuern, um die durch die Zerstäubungsdüse 9 auszugebende Flüssigkeitsmenge so einzustellen, dass das vorbestimmte Mischverhältnis zwischen dem Gas 26 und der Flüssigkeit 25 erreicht werden kann.

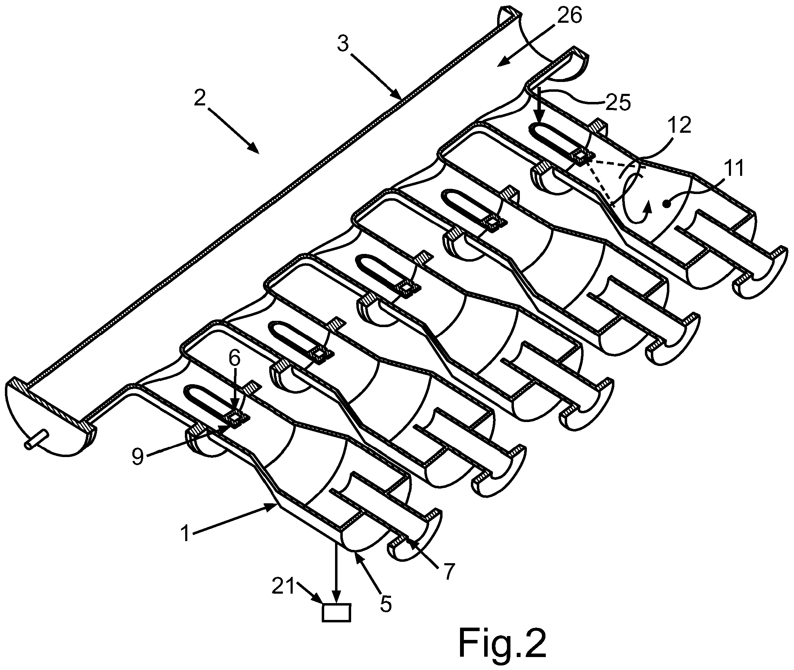

**FIG. 2** zeigt eine schematische Darstellung einer möglichen Ausführungsform des Systems 2, welches mehrere der Luftbefeuchtungsvorrichtungen 1 aufweist. Für einen Betrieb des Systems 2 kann es erforderlich sein, dass ein vorbestimmtes Mischverhältnis zwischen der Flüssigkeit 25 und dem Gas 26 vorliegen muss. Es kann beispielsweise vorgesehen sein, dass durch eine Pumpe oder einen Kompressor das zu befeuchtende Gas 26 bereitgestellt werden kann. Das Gas 26 kann beispielsweise Luft sein. Das Gas 26 kann mit einem vorbestimmten Druck bereitgestellt werden, sodass es entlang des Eingangsrohres 3 und durch die Mischkammer 5 der Luftbefeuchtungsvorrichtung 1 entlang des Hauptströmungspfades 8 strömen kann. Es kann vorgesehen sein, dass das Gas 26 durch mehrere der Luftbefeuchtungsvorrichtungen 1 geführt wird, wobei die Luftbefeuchtungsvorrichtungen 1 dazu vorgesehen sein können, das Gas 26 mit der Flüssigkeit 25 auf ein jeweiliges Mischverhältnis zu vermischen, wobei sich das einzuregelnde Mischverhältnis zwischen den einzelnen Luftbefeuchtungsvorrichtungen 1 voneinander unterscheiden kann.

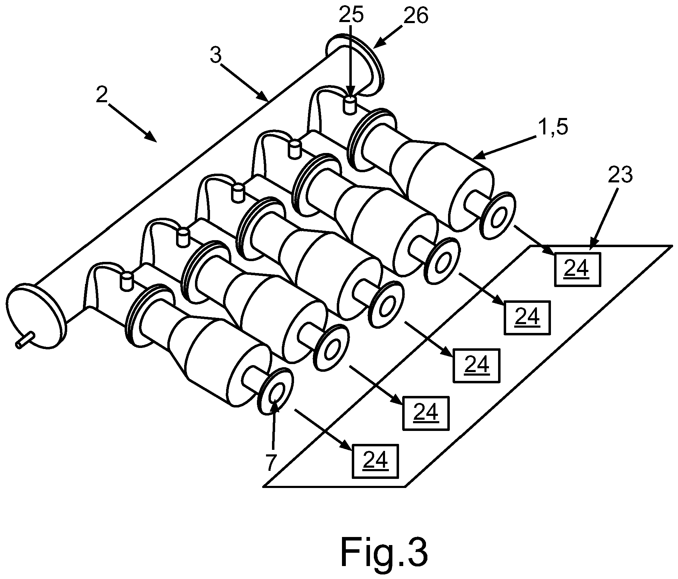

**FIG. 3** zeigt eine weitere schematische Darstellung des Systems 2 aus Fig. 2. Das System 2 kann beispielsweise dafür vorgesehen sein, Luft zum Betreiben eines Brennstoffzellenstapels 23, der mehrere Brennstoffzellen 24 aufweisen kann, zu befeuchten. Bei dem Gas 26 kann es sich beispielsweise um Luft handeln, welche zur Befeuchtung einer Trennmembran einer Kathode als Kathodenluft in die Brennstoffzellen 24 geleitet werden kann. Um einen Betrieb der einzelnen Brennstoffzellen 24 ermöglichen zu können, kann es erforderlich sein, die Membranen der Brennstoffzellen 24 mit feinen Tröpfchen 11 zu befeuchten. Die Membranen können insbesondere Polymer-Elektrolyt-Membranen sein. Damit eine gleichmäßige Befeuchtung der Membran erfolgen kann, kann es erforderlich sein, dass die Tröpfchen 11, die durch die Luftbefeuchtungsvorrichtung 1 der Luft zugeführt werden, eine bestimmte Größe nicht überschreiten. Damit kann ein Kühlen der Brennstoffzellen 24 durch Verdampfen ermöglicht werden und eine Ansammlung von Wasser in der Brennstoffzelle 24, insbesondere in einem Strömungsprofil der Brennstoffzellen 24 vermieden werden. Ein aktueller Feuchtegrad der jeweiligen Membranen kann sich zwischen den einzelnen Brennstoffzellen 24 voneinander unterscheiden. Aus diesem Grund kann es vorteilhaft sein, wenn jeder der Brennstoffzellen 24 eine jeweilige Luftbefeuchtungsvorrichtung 1 zugeordnet ist. Dadurch ergibt sich der Vorteil, dass die Luftfeuchtigkeit individuell für die jeweiligen Brennstoffzellen 24 eingeregelt werden kann.

Das System 2 kann beispielsweise als Luftfahrt-Primärantrieb eingerichtet sein und zur Befeuchtung der Kathodenluft für Brennstoffzellen 24 zum Antreiben eines elektrischen Motors eines Flugzeugs vorgesehen sein. Eine weitere mögliche Ausführungsform des Systems 2 kann beispielsweise zur Befeuchtung einer Brennkammer einer Turbine vorgesehen sein, um eine gleichmäßige Temperaturverteilung oder eine Minimierung der Bildung unerwünschter Gaskomponenten in der Brennkammer zu ermöglichen.

Aus dem Automotive-Bereich sind passive Befeuchter bekannt. Diese erlauben keine zielgerichtete Beeinflussung der relativen Luftfeuchtigkeit der Kathodenluft, sind schwer und voluminös und leisten keinen Beitrag zur Kühlung eines Zellenstapels. Aktive Befeuchtungssyteme wurden bereits unter Verwendung von Zweistoff-Zerstäubungsdüsen untersucht. Diese erfordern ein zusätzliches Druckluftniveau, deutlich oberhalb dessen der Kathodenluft selbst, um den Zerstäubungseffekt zu erzielen. Die Erzeugung dieses Druckluftniveaus ist aufwändig, gerade bei einem geringen Umgebungsluftdruck, wie er beispielsweise in Flugzeugen auf Reiseflughöhe vorliegt.

Die Polymer-Elektrolyt-Membran (PEM) jedes einzelnen Brennstoffzellen-Segments muss individuell befeuchtet werden, ohne Wasseransammlungen im Flowfield zu erzeugen. Am Ausgang eines Brennstoffzellenstapels muss eine relative Luftfeuchtigkeit von 100% eigestellt werden.

Die Befeuchtung muss für einen Luftfahrt-Primärantrieb geeignet sein. Im Unterschied zu Anwendungen im Automobilbereich, enthält die Umgebungsluft im Luftfahrtbereich weniger Wasser und die zu befeuchtenden Luftmengen sind größer.

Es ist vorgesehen, pro Brennstoffzellen-Stack-Segment eine aktive Befeuchtung, unter Verwendung je einer Einstoff-Zerstäubungsdüse zu verwenden, die eine individuell definierte Wassermenge in die Kathodenluft des Stack-Segmentes einbringt. Die Zerstäubungsdüse erzeugt einen Drall im Sprühkreiskegel, der dazu führt, dass die größeren Wassertropfen nach außen wandern. Diese werden durch eine Art Blende oder ein gestuftes Rohr separiert und nur der innere Teil des Sprühkreiskegels, mit den feinen Wassertropfen wird weiter in das Stack-Segment geleitet. Das separierte Wasser kann für eine erneute Ausgabe durch die Zerstäubungsdüse rezirkuliert werden.

Energieaufwand, Gewicht und Bauraum für die Wasserpumpe einer Einstoffdüse sind deutlich kleiner, als der einer zusätzlichen Verdichterstufe für eine Zweistoffdüse. Die nicht ganz so feine Zerstäubung der Einstoffdüse wird durch die Separation des gröberen Anteils des Tropfenspektrums ausgeglichen. Die feinen Wassertropfen tragen durch ihre Verdampfung im Stack zu dessen Kühlung bei. Die passiven Befeuchter aus dem Automobilbereich sind für einen Luftfahr-Primärantrieb zu groß, zu schwer und können unter den Randbedingungen nicht die geforderten 100% relative Luftfeuchtigkeit am Stackausgang gewährleisten.

### Bezugszeichenliste:

- 1: Luftbefeuchtungsvorrichtung
- 2: System
- 3: Eingangsrohr
- 4: Ausgangsrohr
- 5: Mischkammer
- 6: Eingangsöffnung
- 7: Ausgangsöffnung
- 8: Hauptströmungspfad
- 9: Zerstäubungsdüse
- 10: Sprühnebel
- 11: Tröpfchen
- 12: Sprühkreiskegel
- 13: Kegelwinkel
- 14: Hohlkegel
- 15: Innenwinkel
- 16: Separierungseinrichtung
- 17: Separierungsöffnung
- 18: Inneres Rohr
- 19: Äußeres Rohr
- 20: Separierungsausgang
- 21: Rückgewinnungseinrichtung
- 22: Regeleinrichtung
- 23: Brennstoffzellenstapel
- 24: Brennstoffzelle
- 25: Flüssigkeit
- 26: Gas

## Patentansprüche

1. Luftbefeuchtungsvorrichtung (1), aufweisend eine Mischkammer (5), in der eine Zerstäubungsdüse (9), eingerichtet zur Ausgabe einer Flüssigkeit (25) als Sprühnebel (10) angeordnet ist, wobei
- die Mischkammer (5) dazu eingerichtet ist, ein entlang eines Hauptströmungspfades (8) durch die Mischkammer (5) geleitetes Gas (26) mit dem Sprühnebel (10) zu vermischen und an einer Ausgangsöffnung (7) der Mischkammer (5) auszuleiten, und
- die Zerstäubungsdüse (9) eine Dralleinrichtung aufweist, die dazu eingerichtet ist, Tröpfchen (11) des Sprühnebels (10) mit einem Drall zu beaufschlagen, um den Sprühnebel (10) als einen sich entlang des Hauptströmungspfades (8) mit einem Kegelwinkel (13) öffnenden geraden Sprühkreiskegel (12) auszugeben,
**dadurch gekennzeichnet, dass**
die Mischkammer (5) eine Separierungseinrichtung (16) aufweist, die dazu eingerichtet ist,
- Tröpfchen (11) des Sprühkreiskegels (12), die sich ausgehend von der Zerstäubungsdüse (9) entlang eines Hohlkegels (14), aufweisend einen vorbestimmten Innenwinkel (15), bewegen, aufzufangen,
- eine durch das Auffangen der Tröpfchen (11) zurückgewonnene Flüssigkeit (25) an einem Separierungsausgang der Separierungseinrichtung (16) auszugeben, und
- Tröpfchen (11), die sich innerhalb des Hohlkegels (14) bewegen, der Ausgangsöffnung (7) der Mischkammer (5) zuzuleiten.

2. Luftbefeuchtungsvorrichtung (1) nach Anspruch 1,
**dadurch gekennzeichnet, dass**
die Separierungseinrichtung (16) ein Koaxialrohr aufweist, wobei
ein äußeres Rohr (19) des Koaxialrohres dazu eingerichtet ist, die sich entlang des Hohlkegels (14) bewegenden Tröpfchen (11) aufzufangen, und
ein inneres Rohr (18) des Koaxialrohres dazu eingerichtet ist, die sich innerhalb des Hohlkegels (14) bewegenden Tröpfchen (11) der Ausgangsöffnung (7) der Mischkammer (5) zuzuleiten.

3. Luftbefeuchtungsvorrichtung (1) nach Anspruch 1,
**dadurch gekennzeichnet, dass**
die Separierungseinrichtung (16) eine durch eine Blende umläufig umschlossene Separierungsöffnung (17) aufweist, wobei
- die Blende dazu eingerichtet ist, die sich entlang des Hohlkegels (14) bewegenden Tröpfchen (11) aufzufangen, und
- die Separierungsöffnung (17) dazu eingerichtet ist, die sich innerhalb des Hohlkegels (14) bewegenden Tröpfchen (11) der Ausgangsöffnung (7) der Mischkammer (5) zuzuleiten.

4. Luftbefeuchtungsvorrichtung (1) nach einem der Ansprüche 1 bis 3,
**dadurch gekennzeichnet, dass**
die Luftbefeuchtungseinrichtung (1) eine Rückgewinnungseinrichtung (21) aufweist, die dazu eingerichtet ist, die zurückgewonnene Flüssigkeit (25) aus der Separierungseinrichtung (16) der Zerstäubungsdüse (9) zuzuleiten.

5. Luftbefeuchtungsvorrichtung (1) nach einem der vorhergehenden Ansprüche,
**dadurch gekennzeichnet, dass**
die Luftbefeuchtungseinrichtung eine Regeleinrichtung (22) aufweist, die dazu eingerichtet ist, die durch die Zerstäubungsdüse (9) auszugebende Flüssigkeitsmenge einzustellen, um ein vorbestimmtes Mischverhältnis zwischen dem Gas (26) und der Flüssigkeit (25) an der Ausgangsöffnung (7) der Mischkammer (5) einzuregeln.

6. Verfahren zum Betreiben einer Luftbefeuchtungsvorrichtung (1), die eine Mischkammer (5) aufweist, in der eine Zerstäubungsdüse (9) angeordnet ist, wobei
- entlang eines Hauptströmungspfades (8) durch die Mischkammer (5) Gas (26) geleitetet wird,
- durch die Zerstäubungsdüse (9) eine Flüssigkeit (25) als Sprühnebel (10) ausgegeben wird, und
- das Gas (26) in der Mischkammer (5) mit dem Sprühnebel (10) vermischt und an einer Ausgangsöffnung (7) der Mischkammer (5) ausgeleitet wird,
**dadurch gekennzeichnet, dass**
- Tröpfchen (11) des Sprühnebels (10) durch eine Dralleinrichtung der Zerstäubungsdüse (9) mit einem Drall beaufschlagt werden,
- der Sprühnebel (10) aufgrund des Dralls der Tröpfchens (11) durch die Zerstäubungsdüse (9) als ein sich entlang des Hauptströmungspfades (8) mit einem Kegelwinkel (13) öffnender gerader Sprühkreiskegel (12) ausgegeben wird,
- Tröpfchen (11) des Sprühkreiskegels (12), die sich ausgehend von der Zerstäubungsdüse (9) entlang eines Hohlkegels (14) mit einem vorbestimmten Innenwinkel (15) bewegen durch eine Separierungseinrichtung (16) der Mischkammer (5) aufgefangen werden,
- eine durch das Auffangen der Tröpfchen (11) zurückgewonnene Flüssigkeit (25) durch die Separierungseinrichtung (16) an einem Separierungsausgang (20) der Separierungseinrichtung (16) ausgegeben wird, und
- Tröpfchen (11), die sich innerhalb des Hohlkegels (14) bewegen durch die Separierungseinrichtung (16) der Ausgangsöffnung (7) der Mischkammer (5) zugeleitet werden.

7. System (2), aufweisend Luftbefeuchtungsvorrichtungen (1) nach einem der Ansprüche 1 bis 5 und einen Brennstoffzellenstapel (23), wobei
- der Brennstoffzellenstapel (23) Brennstoffzellen (24) aufweist,
- das System (2) eine Kathodenluftbereitstellungsvorrichtung aufweist, die dazu eingerichtet ist, eine mit Wasser zu mischende Kathodenluft in die Luftbefeuchtungsvorrichtungen (1) einzuleiten, **dadurch gekennzeichnet, dass**
- die Luftbefeuchtungsvorrichtungen (1) an ihren jeweiligen Ausgangsöffnungen (7), insbesondere Ausgangsöffnungen (7) einer jeweiligen Mischkammer (5) der Luftbefeuchtungsvorrichtungen (1), mit einer jeweiligen der Brennstoffzellen (24) verbunden sind.

8. System (2) nach Anspruch 7, **dadurch gekennzeichnet, dass** das System (2) als ein Luftfahrt-Primärantrieb ausgebildet ist

## Claims

1. Air humidification apparatus (1), comprising a mixing chamber (5) in which an atomizing nozzle (9) designed to dispense a liquid (25) as a spray mist (10) is arranged,
- the mixing chamber (5) being designed to mix a gas (26), conveyed along a main flow path (8) through the mixing chamber (5), with the spray mist (10) and to discharge it at an outlet opening (7) of the mixing chamber (5), and
- the atomizing nozzle (9) comprising a swirl device which is designed to impart a swirl to droplets (11) of the spray mist (10) in order to dispense the spray mist (10) as a straight spray circular cone (12) opening along the main flow path (8) at a cone angle (13),
**characterized in that**
the mixing chamber (5) comprises a separating device (16) which is designed to
- collect droplets (11) of the spray circular cone (12) which move from the atomizing nozzle (9) along a hollow cone (14) having a predetermined internal angle (15),
- dispense a liquid (25) recovered by collecting the droplets (11) at a separation outlet of the separating device (16), and
- supply droplets (11) moving within the hollow cone (14) to the outlet opening (7) of the mixing chamber (5).

2. Air humidification apparatus (1) according to claim 1,
**characterized in that**
the separating device (16) comprises a coaxial tube,
an outer tube (19) of the coaxial tube being designed to collect the droplets (11) moving along the hollow cone (14), and
an inner tube (18) of the coaxial tube being designed to supply the droplets (11) moving within the hollow cone (14) to the outlet opening (7) of the mixing chamber (5).

3. Air humidification apparatus (1) according to claim 1,
**characterized in that**
the separating device (16) comprises a separation opening (17) which is circumferentially surrounded by a baffle,
- the baffle being designed to collect the droplets (11) moving along the hollow cone (14), and
- the separation opening (17) being designed to supply the droplets (11) moving within the hollow cone (14) to the outlet opening (7) of the mixing chamber (5).

4. Air humidification apparatus (1) according to any of claims 1 to 3,
**characterized in that** the air humidification apparatus (1) comprises a recovery device (21) which is designed to supply the recovered liquid (25) from the separating device (16) to the atomizing nozzle (9).

5. Air humidification apparatus (1) according to any of the preceding claims, **characterized in that**
the air humidification apparatus comprises a control device (22) which is designed to adjust the amount of liquid to be dispensed through the atomizing nozzle (9) in order to regulate a predetermined mixing ratio between the gas (26) and the liquid (25) at the outlet opening (7) of the mixing chamber (5).

6. Method for operating an air humidification apparatus (1) comprising a mixing chamber (5) in which an atomizing nozzle (9) is arranged,
- gas (26) being conveyed along a main flow path (8) through the mixing chamber (5),
- a liquid (25) being dispensed as a spray mist (10) by the atomizing nozzle (9), and
- the gas (26) being mixed with the spray mist (10) in the mixing chamber (5) and discharged at an outlet opening (7) of the mixing chamber (5),
**characterized in that**
- a swirl is imparted to droplets (11) of the spray mist (10) by a swirl device of the atomizing nozzle (9),
- due to the swirl of the droplets (11), the spray mist (10) is dispensed as a straight spray circular cone (12) opening along the main flow path (8) at a cone angle (13) by the atomizing nozzle (9),
- droplets (11) of the spray circular cone (12) which move from the atomizing nozzle (9) along a hollow cone (14) having a predetermined internal angle (15) are collected by a separating device (16) of the mixing chamber (5),
- a liquid (25) recovered by collecting the droplets (11) is dispensed by the separating device (16) at a separation outlet (20) of the separating device (16), and
- droplets (11) moving within the hollow cone (14) are supplied by the separating device (16) to the outlet opening (7) of the mixing chamber (5).

7. System (2) comprising air humidification apparatuses (1) according to any of claims 1 to 5 and a fuel cell stack (23),
- the fuel cell stack (23) comprising fuel cells (24),
- the system (2) comprising a cathode air supply apparatus which is designed to introduce cathode air to be mixed with water into the air humidification apparatuses (1), **characterized in that**
- the air humidification apparatuses (1) are each connected to a particular fuel cell (24) at their respective outlet openings (7), in particular outlet openings (7) of a particular mixing chamber (5) of the air humidification apparatuses (1).

8. System (2) according to claim 7, **characterized in that** the system (2) is designed as an aviation primary drive.

## Revendications

1. Dispositif d'humidification de l'air (1), présentant une chambre de mélange (5) dans laquelle est disposée une buse d'atomisation (9), conçue pour distribuer un liquide (25) sous la forme d'un brouillard pulvérisé (10), dans lequel
- la chambre de mélange (5) est conçue pour mélanger un gaz (26) dirigé à travers la chambre de mélange (5) le long d'un trajet d'écoulement principal (8) avec le brouillard pulvérisé (10) et pour l'évacuer au niveau d'une ouverture de sortie (7) de la chambre de mélange (5), et
- la buse d'atomisation (9) présente un appareil de tourbillonnement qui est conçu pour soumettre les gouttelettes (11) du brouillard pulvérisé (10) à un tourbillonnement afin de distribuer le brouillard pulvérisé (10) sous la forme d'un cône circulaire pulvérisé (12) rectiligne s'ouvrant le long du trajet d'écoulement principal (8) avec un angle de cône (13),
**caractérisé en ce que**
la chambre de mélange (5) présente un appareil de séparation (16) qui est conçu pour
- collecter des gouttelettes (11) du cône circulaire pulvérisé (12) qui se déplacent à partir de la buse d'atomisation (9) le long d'un cône creux (14), présentant un angle intérieur (15) prédéfini,
- distribuer un liquide (25) récupéré par la collecte des gouttelettes (11) à une sortie de séparation de l'appareil de séparation (16), et
- amener les gouttelettes (11) se déplaçant à l'intérieur du cône creux (14) à l'ouverture de sortie (7) de la chambre de mélange (5).

2. Dispositif d'humidification de l'air (1) selon la revendication 1, **caractérisé en ce que**
l'appareil de séparation (16) présente un tube coaxial, dans lequel un tube extérieur (19) du tube coaxial est conçu pour collecter les gouttelettes (11) se déplaçant le long du cône creux (14), et
un tube intérieur (18) du tube coaxial est conçu pour diriger les gouttelettes (11) se déplaçant à l'intérieur du cône creux (14) vers l'ouverture de sortie (7) de la chambre de mélange (5).

3. Dispositif d'humidification de l'air (1) selon la revendication 1,
**caractérisé en ce que**
l'appareil de séparation (16) présente une ouverture de séparation (17) entourée sur sa périphérie par un obturateur, dans lequel
- l'obturateur est conçu pour collecter les gouttelettes (11) se déplaçant le long du cône creux (14), et
- l'ouverture de séparation (17) est conçue pour diriger les gouttelettes (11) se déplaçant à l'intérieur du cône creux (14) vers l'ouverture de sortie (7) de la chambre de mélange (5).

4. Dispositif d'humidification de l'air (1) selon l'une des revendications 1 à 3,
**caractérisé en ce que** l'appareil d'humidification de l'air (1) présente un appareil de récupération (21) qui est conçu pour amener le liquide (25) récupéré provenant de l'appareil de séparation (16) à la buse d'atomisation (9).

5. Dispositif d'humidification de l'air (1) selon l'une des revendications précédentes, **caractérisé en ce que**
l'appareil d'humidification de l'air présente un appareil de régulation (22) qui est conçu pour régler la quantité de liquide à distribuer par la buse d'atomisation (9) afin de réguler un rapport de mélange prédéfini entre le gaz (26) et le liquide (25) au niveau de l'ouverture de sortie (7) de la chambre de mélange (5).

6. Procédé permettant de faire fonctionner un dispositif d'humidification de l'air (1) qui présente une chambre de mélange (5) dans laquelle est disposée une buse d'atomisation (9), dans lequel
- du gaz (26) est dirigé le long d'un trajet d'écoulement principal (8) à travers la chambre de mélange (5),
- un liquide (25) est distribué sous la forme d'un brouillard pulvérisé (10) par la buse d'atomisation (9), et
- le gaz (26) est mélangé dans la chambre de mélange (5) avec le brouillard pulvérisé (10) et est évacué au niveau d'une ouverture de sortie (7) de la chambre de mélange (5),
**caractérisé en ce que**
- des gouttelettes (11) du brouillard pulvérisé (10) sont soumises à un tourbillonnement par un appareil de tourbillonnement de la buse d'atomisation (9),
- le brouillard pulvérisé (10) est distribué en raison du tourbillonnement des gouttelettes (11) à travers la buse d'atomisation (9) sous la forme d'un cône circulaire pulvérisé (12) rectiligne s'ouvrant le long du trajet d'écoulement principal (8) avec un angle de cône (13),
- les gouttelettes (11) du cône circulaire pulvérisé (12) qui se déplacent à partir de la buse d'atomisation (9) le long d'un cône creux (14) avec un angle intérieur (15) prédéfini sont collectées par un appareil de séparation (16) de la chambre de mélange (5),
- un liquide (25) récupéré par la collecte des gouttelettes (11) est distribué par l'appareil de séparation (16) à une sortie de séparation (20) de l'appareil de séparation (16), et
- des gouttelettes (11) qui se déplacent à l'intérieur du cône creux (14) sont amenées par l'appareil de séparation (16) à l'ouverture de sortie (7) de la chambre de mélange (5).

7. Système (2), présentant des dispositifs d'humidification de l'air (1) selon l'une des revendications 1 à 5 et un empilement de piles à combustible (23), dans lequel
- l'empilement de piles à combustible (23) présente des piles à combustible (24),
- le système (2) présente un dispositif de fourniture d'air cathodique qui est conçu pour introduire de l'air cathodique à mélanger avec de l'eau dans les dispositifs d'humidification de l'air (1), **caractérisé en ce que**
- les dispositifs d'humidification de l'air (1) sont reliés à une pile à combustible respective parmi les piles à combustible (24) au niveau de leurs ouvertures de sortie (7) respectives, en particulier des ouvertures de sortie (7) d'une chambre de mélange (5) respective des dispositifs d'humidification de l'air (1).

8. Système (2) selon la revendication 7, **caractérisé en ce que** le système (2) est réalisé sous la forme d'un entraînement primaire d'aéronef.
